# FASCICULE DE BREVET EUROPEEN

(11) **EP 0 518 272 B1**
(45) Date de publication et mention de la délivrance du brevet: **25.01.1995**
(21) Numéro de dépôt: 92109715.0
(22) Date de dépôt: 10.06.1992
(51) Int. Cl.: F17C 1/16, B29C 53/58, B29C 53/60

(54) **Réservoir et son procédé de fabrication**
Behälter und seine Herstellungsverfahren
Container and its fabrication process

(30) Priorité: 14.06.1991 FR 9107328
(43) Date de publication de la demande: 16.12.1992
(73) Titulaire: GEC ALSTHOM SA, 75116 Paris (FR)
(72) Inventeur: Camusso, André, F-69005 Lyon (FR); Woehrle, Maurice, F-38500 Voiron (FR)
(74) Mandataire: Weinmiller, Jürgen

(56) Documents cités:
- FR-A- 1 413 156
- GB-A- 988 582
- US-A- 3 106 940
- US-A- 4 614 279

## Description

La présente invention concerne un réservoir. Elle concerne plus particulièrement les réservoirs destinés à contenir des fluides sous pression.

Un tel réservoir est décrit par exemple dans le brevet GB-988582. Il comprend une partie centrale tubulaire cylindrique appelée virole et deux calottes sensiblement sphériques appelées fonds, fermant la virole à ses deux extrémités.

La paroi du réservoir est constituée d'une enveloppe externe, et éventuellement d'une enveloppe interne. L'enveloppe externe est constituée d'un enroulement dit filamentaire de mèches de fibres imprégnées de résine, et est destinée à garantir la tenue mécanique de la structure, notamment lorsque le réservoir est rempli d'un fluide sous pression, et donc soumis à une pression interne importante. L'enveloppe Interne, appelée liner, est constituée d'un matériau plastique par exemple, et destinée à assurer l'étanchéité du réservoir lorsque cela s'avère nécessaire.

L'enveloppe externe présente en outre deux ouvertures appelées "ouvertures polaires" pratiquées dans les fonds sur son axe de symétrie de révolution (on dit que ces ouvertures sont pratiquées aux pôles du réservoir). L'enveloppe externe est particulièrement robuste dans les zones entourant les ouvertures polaires du fait de la concentration de mèches de fibres dans ces régions. On tire généralement profit de l'existence des ouvertures polaires pour y installer des éléments de raccordement (appelés sièges de raccordement) du réservoir à des conduites, ou des dispositifs destinés par exemple à la purge ou à la visite des réservoirs. Bien évidemment, lorsque le réservoir comporte un liner, ce dernier présente alors des ouvertures qui coopèrent avec celles de l'enveloppe externe.

Le réservoir selon le brevet GB-988582 peut présenter en outre des ouvertures pratiquées ailleurs qu'aux pôles, pour permettre également le raccordement à des éléments de tuyauterie.

Dans le but de renforcer le réservoir au niveau de ces ouvertures et dans leur voisinage immédiat, des pièces de renfort sont prévues pour être insérées à l'intérieur de l'enveloppe externe. En pratique, une portion du liner est découpée et remplacée par la pièce de renfort. Ces pièces de renfort peuvent être constituées de portions d'enroulement filamentaire, de plastique moulé, de caoutchouc ou même de métal.

Pour fixer ces réservoirs à un véhicule ou dans un local, on utilise en général des brides de fixation coopérant avec les sièges de raccordement des ouvertures polaires.

De tels réservoirs ne sont toutefois pas satisfaisants. En effet, s'il est nécessaire de les doter de moyens de fixation au niveau des ouvertures pratiquées ailleurs qu'aux pôles, notamment lorsque le réservoir, encombrant, est confiné dans un espace réduit empêchant l'accès aux ouvertures polaires, les pièces de renfort utilisées ne sont pas suffisantes pour reprendre les efforts importants dus à la fixation et au ballottement du fluide lorsque le réservoir est installé dans un véhicule en mouvement. De tels efforts risquent alors de conduire à une rupture rapide en fatigue du réservoir.

Le but de la présente invention est donc de réaliser un réservoir destiné à contenir un fluide sous pression, et pouvant être fixé sans subir d'efforts importants dans un local ou un véhicule en mouvement par l'intermédiaire d'une ouverture pratiquée ailleurs qu'aux pôles.

La présente invention propose à cet effet un réservoir du type destiné à contenir un fluide sous pression, avec une partie centrale de forme sensiblement cylindrique appelée virole, et deux calottes sensiblement sphériques fermant ladite virole à ses deux extrémités, ledit réservoir comportant :
- une enveloppe externe en un matériau composite,
- une enveloppe interne solidaire de ladite enveloppe externe,
- une ouverture, appelée première ouverture, traversant ladite enveloppe interne et ladite enveloppe externe,
- un élément de renfort de ladite enveloppe externe autour de ladite première ouverture, situé à l'intérieur de ladite enveloppe externe et comprenant également une ouverture, appelée deuxième ouverture, coopérant avec ladite première ouverture,
   caractérisé en ce que ladite première ouverture se trouve dans la virole et est munie de moyens de fixation dudit réservoir, et en ce que ledit élément de renfort :
- est inséré entre ladite enveloppe interne et ladite enveloppe externe,
- possède une face plane orientée vers l'intérieur dudit réservoir et une face opposée à ladite face plane et ayant un contour adapté de sorte que la surface externe dudit réservoir est conservée,
- occupe au moins toute la longueur de ladite virole.

La forme particulière de l'élément de renfort lui confère une résistance optimale lorsqu'il est soumis aux efforts de la fixation, c'est-à-dire à des efforts de flexion. La fixation effectuée au niveau de la première ouverture est ainsi capable de résister aux contraintes importantes imposées notamment lorsque le réservoir est installé dans un véhicule en mouvement.

D'autre part, la situation de la première ouverture au niveau de la virole et la longueur de l'élément de renfort contribuent également à assurer une résistance optimale aux efforts de fixation et ainsi une meilleure protection du réservoir.

Avantageusement, un matériau plastique de faible densité peut être inséré entre la face plane et la face opposée de l'élément de renfort. D'autre part, une bague concentrique à la deuxième ouverture, ainsi qu'un anneau superposé à cette bague et également concentrique à la deuxième ouverture, peuvent être introduits entre les deux faces de l'élément de renfort. Ces différents éléments améliorent encore la résistance de l'élément de renfort, et donc celle du réservoir.

De manière avantageuse encore, lorsque les faces de l'élément de renfort sont en matériau composite, ou lorsque l'élément de renfort présente une structure sandwich, le rapport entre la résistance en flexion de la plaque et son poids augmente.

Les moyens de fixation peuvent comprendre :
- une embase ayant une partie tubulaire terminée à l'une de ses extrémités par une collerette éventuellement plane de plus grand diamètre que le diamètre de la partie tubulaire et comportant à l'extrémité opposée à celle munie de la collerette, un filetage extérieur, la collerette venant en appui contre l'élément de renfort, à l'intérieur de l'enveloppe externe, de sorte que la partie tubulaire soit saillante hors du réservoir.
- un élément de fixation venant se visser sur le filetage extérieur de l'embase pour exercer une pression sur l'enveloppe externe.

Un procédé de fabrication d'un réservoir selon l'invention comprend les opérations suivantes :
- moulage de l'enveloppe interne, la forme de l'enveloppe interne étant adaptée pour que l'insertion de l'élément de renfort ne perturbe pas le profil prévu pour le réservoir,
- collage de l'élément de renfort à l'enveloppe interne,
- enroulement filamentaire du matériau composite constituant l'enveloppe externe autour de l'enveloppe interne munie de l'élément de renfort, pour obtenir le réservoir,
- traitement thermique du réservoir,
- perçage des première et deuxième ouvertures.

D'autres caractéristiques et avantages de la présente invention apparaîtront dans la description suivante d'un réservoir selon l'invention donnée à titre illustratif et nullement limitatif.
Dans les figures suivantes :
- la figure 1 représente une demi-coupe en élévation d'un réservoir selon l'invention,
- la figure 2 représente une demi-coupe transversale, selon son axe de symétrie de révolution, du réservoir de la figure 1,
- la figure 3 est une vue de dessus avec coupe partielle à plusieurs niveaux de la plaque de renfort du réservoir de la figure 1,
- la figure 4 est une coupe selon la ligne IV-IV de la figure 3,
- la figure 5 est une vue dans la direction V de la figure 3.

Dans toutes ces figures, les éléments communs sont référencés avec les mêmes numéros.

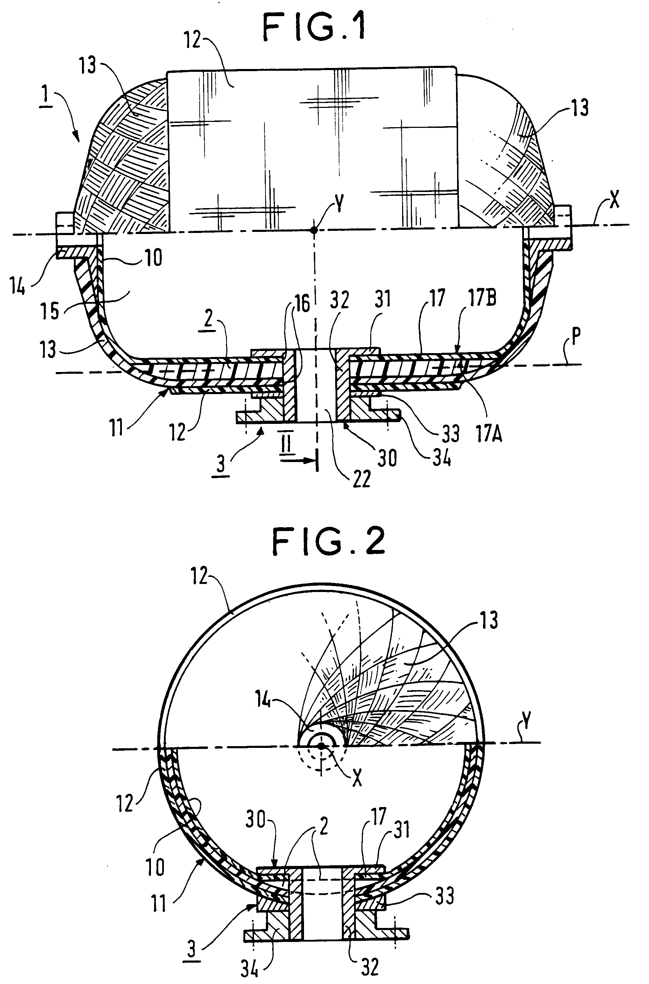

Les figures 1 et 2 montrent un réservoir 1 selon l'invention muni d'un élément (ou plaque) de renfort 2 et d'un siège de raccordement (moyen de fixation) 3.

Plus précisément, le réservoir 1 comprend une enveloppe interne ou liner 10 en un matériau plastique, entourée d'une enveloppe externe 11 en fibres de verre, de carbone, de polyaramide ou autre, imprégnées de résine et enroulées puis polymérisées autour du liner 10. Le réservoir 1 présente une partie centrale tubulaire cylindrique ou virole 12 fermée à ses deux extrémités par des fonds 13 percés chacun d'une ouverture polaire circulaire 14 ayant pour axe l'axe de symétrie de révolution X du réservoir 1, de sorte que, lorsque les ouvertures 14 ne sont pas fermées ou reliées à des conduites, le volume intérieur 15 du liner 10 est en communication avec le milieu extérieur au réservoir 1. On dit que le réservoir 1 a un profil isotensoïde. Grâce à ce profil spécifique et à la répartition et l'orientation des fibres de l'enveloppe externe, la pression interne exercée par un fluide contenu dans le réservoir n'est supportée que par les fibres et ces dernières sont soumises uniquement à un effort de traction appliqué le long de leur axe longitudinal. De plus, la tension des fibres est uniforme en tout point de la structure. De telles dispositions permettent d'obtenir un rapport maximal entre la résistance mécanique du réservoir et sa masse.

En outre, la virole 12 est percée à sa partie inférieure (située en-dessous de l'axe X dans le plan de la figure 1) d'une ouverture circulaire supplémentaire 16 mettant également en communication le volume intérieur 15 et le milieu extérieur.

Comme cela est représenté en figure 2, le liner 10 a une section transversale quasiment circulaire, et présentant à sa partie inférieure une portion tronquée selon une corde parallèle à l'axe Y, horizontal et orthogonal à l'axe X. Le liner 10 comporte donc une portion plane 17 dans le plan P dont la trace est représentée en figure 1. C'est à travers une partie centrale de cette portion plane 17 qu'est percée l'ouverture 16.

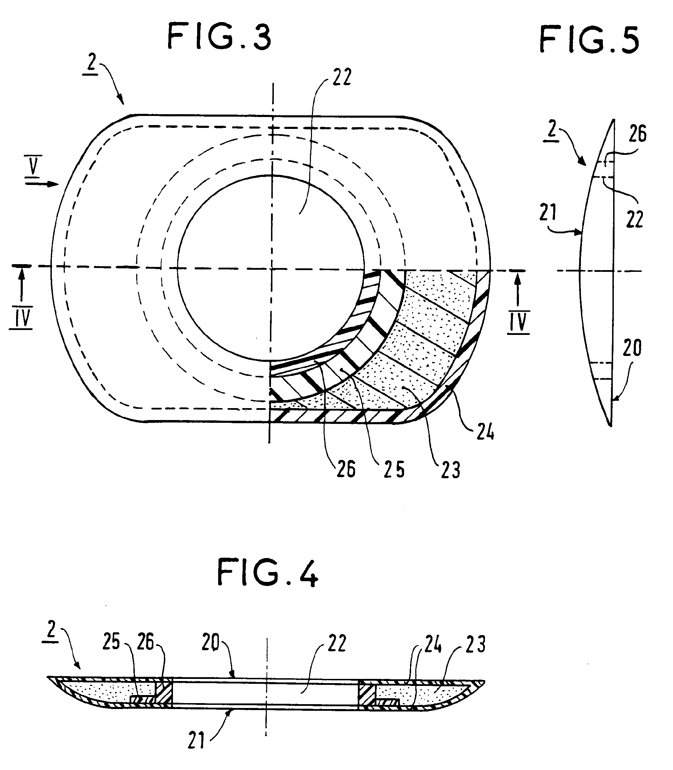

Entre la portion plane 17 et la portion inférieure de l'enveloppe 11 en regard, est intercalée la plaque de renfort 2. La plaque 2 vient remplir exactement l'espace laissé libre entre la surface inférieure 17A de la portion plane 17 et l'enveloppe 11. Ainsi, selon l'invention, la plaque 2 possède une première face plane 20, et une seconde face 21 de forme extérieure plus complexe et adaptée pour conserver le profil extérieur du réservoir 1 (voir figure 5). La plaque 2 est en outre percée d'une ouverture circulaire 22 en communication avec l'ouverture 16. Avantageusement, la plaque 2 est réalisée en un matériau composite semblable à celui constituant l'enveloppe externe 11.

Afin d'assurer un renfort mécanique suffisant tout en réduisant au maximum le poids et le coût de la plaque 2, cette dernière peut avoir la structure représentée aux figures 3 et 4. Dans ces figures, la plaque 2 a une structure communément appelée "structure caisson" dans le domaine des matériaux composites. En effet, la plaque 2 comporte selon cette structure une âme 23 réalisée en un matériau à basse densité comme une mousse de polyuréthane, enfermée dans un caisson 24 en matériau composite, dont la surface externe est celle de la plaque 2. Afin de renforcer l'enveloppe 11 au niveau de la coupure effectuée pour obtenir l'ouverture 16, un élément annulaire 25 en matériau composite est inséré dans le caisson 24, concentriquement à l'ouverture 22 et en contact avec la face 21. Enfin, une bague 26 en un matériau composite est également insérée dans le caisson 24, concentriquement à l'ouverture 22, à l'intérieur de l'anneau 25 et en contact avec la face 21.

La plaque 2 peut également avoir une structure dite sandwich (non représentée), c'est-à-dire que l'âme en matériau à basse densité est "prise en sandwich" entre deux plaques en matériau composite. La surface extérieure de l'ensemble est celle de la plaque 2.

Ainsi, grâce à la plaque de renfort 2 un élément de fixation du réservoir 1 solidaire du siège de raccordement 3 peut être installé sur le réservoir 1 et maintenir ce dernier sans faire subir d'efforts à sa structure.

Le siège de raccordement 3 est un équipement intermédiaire généralement métallique. Il comporte une embase 30 de forme tubulaire terminée par une collerette 31 en forme d'anneau de diamètre supérieur à celui du tube principal 32 de l'embase 30. Le diamètre du tube 32 est sensiblement égal à celui des ouvertures 16 et 22. L'embase 30, préalablement introduite à l'intérieur de la structure par un moyen approprié (par exemple lors de la fabrication du liner 10), est donc installée dans les ouvertures 16 et 22 de sorte que la collerette 31 vienne en appui contre la surface 17B de la portion plane 17 du liner 10 à l'intérieur de ce dernier. L'embase 30 possède en outre, à son extrémité opposée à celle portant la collerette 31, un filetage intérieur et un filetage extérieur. Une entretoise 33 dont une des faces épouse la surface externe du réservoir 1 au niveau de l'ouverture 16 est enfilée sur la partie tubulaire 32, et une bague de fixation 34 venant se serrer contre la entretoise 33 est vissée sur le filetage extérieur de l'embase 30.

La bague 26 de la plaque 2 permet de reprendre les efforts locaux dus au serrage imposé par la bague de fixation 34 à l'âme 23 et qui risqueraient de l'écraser.

En outre, la face plane 20 de la plaque 2 permet également d'adopter pour la collerette 31 de l'embase 30 une forme simple, facile à mettre en place et peu onéreuse. Cette forme assure en outre un contact plus uniforme qu'une forme courbée. Cette dernière nécessiterait en effet un positionnement précis, car toute rotation de l'embase autour de son axe longitudinal lors de l'installation entraînerait un mauvais contact et par conséquent des performances d'étanchéité médiocres et des efforts mal répartis qui conduiraient à une rupture du réservoir.

Selon un mode de réalisation possible du réservoir 1, le liner 10 est fabriqué dans un moule dont le volume est réduit par rapport au volume des moules permettant de fabriquer les liners des réservoirs de l'art antérieur. Cette réduction de volume correspond au volume nécessaire pour insérer la plaque de renfort entre l'enveloppe externe et le liner sans perturber le profil extérieur (isotensoïde par exemple) du réservoir. La plaque 2 non percée de l'ouverture 22 est ensuite collée, au moyen d'une résine adaptée, au liner 10 non percé de l'ouverture 16 avant la mise en oeuvre de l'enroulement filamentaire destiné à fabriquer l'enveloppe 11. L'ensemble du liner 10 et de la plaque 2 est alors monté sur un arbre tournant, puis l'enroulement filamentaire est réalisé selon une méthode connue. L'ensemble est enfin placé, dans une étuve pour permettre la polymérisation de la résine de collage et de la résine du matériau composite de l'enveloppe. Les ouvertures 16 et 22 sont ensuite pratiquées dans la virole 12 et dans la plaque 2.

La plaque de renfort 2 selon l'invention permet donc d'effectuer la fixation du réservoir 1 sans introduire d'efforts qui risqueraient de conduire à la rupture de ce dernier. De plus, elle autorise la suspension du réservoir par l'intermédiaire des ouvertures placées en virole, ce qui n'était pas envisageable auparavant, et rend donc plus flexible l'utilisation des réservoirs de l'art antérieur.

En outre, le profil de la plaque de renfort permet de respecter le profil souhaité du réservoir (isotensoïde ou autre). Sa disposition à l'intérieur de l'enveloppe externe composite minimise la perturbation de la répartition locale des efforts qu'elle crée.

Bien évidemmment, l'invention n'est pas limitée au mode de réalisation qui vient d'être décrit.

La plaque de renfort peut en particulier coopérer avec plus d'un siège de raccordement, et il peut y avoir plusieurs plaques de renfort par réservoir, chaque fois qu'une ouverture est pratiquée dans la virole par exemple.

Enfin, on pourra remplacer tout moyen par un moyen équivalent sans sortir du cadre de l'invention.

## Revendications

1. Réservoir du type destiné à contenir un fluide sous pression, avec une partie centrale de forme sensiblement cylindrique appelée virole, et deux calottes sensiblement sphériques fermant ladite virole à ses deux extrémités, ledit réservoir comportant :
- une enveloppe externe en un matériau composite,
- une enveloppe interne solidaire de ladite enveloppe externe,
- une ouverture, appelée première ouverture, traversant ladite enveloppe interne et ladite enveloppe externe,
- un élément de renfort de ladite enveloppe externe autour de ladite première ouverture, situé à l'intérieur de ladite enveloppe externe et comprenant également une ouverture, appelée deuxième ouverture, coopérant avec ladite première ouverture,
caractérisé en ce que ladite première ouverture (16) se trouve dans la virole (12) et est munie de moyens de fixation (3) dudit réservoir, et en ce que ledit élément de renfort (2) :
- est inséré entre ladite enveloppe interne (10) et ladite enveloppe externe (11),
- possède une face plane (20) orientée vers l'intérieur dudit réservoir (1) et une face (21) opposée à ladite face plane (20) et ayant un contour adapté de sorte que la surface externe dudit réservoir (1) est conservée,
- occupe au moins toute la longueur de ladite virole (12).

2. Réservoir selon la revendication 1 caractérisé en ce qu'entre ladite face plane (20) et ladite face opposée (21) dudit élément de renfort (2) est inséré un matériau plastique de faible densité (23).

3. Réservoir selon l'une des revendications 1 ou 2 caractérisé en ce que ledit élément de renfort (2) comprend, entre ladite face plane (20) et ladite face opposée (21), autour de ladite deuxième ouverture (22), une bague (26) concentrique à ladite deuxième ouverture (22), à laquelle est superposé un anneau (25) également concentrique à ladite deuxième ouverture (22).

4. Réservoir selon l'une des revendications 1 à 3 caractérisé en ce que lesdites faces (20, 21) dudit élément de renfort (2) sont en un matériau composite.

5. Réservoir selon la revendication 1, caractérisé en ce que ledit élément de renfort (2) a une structure sandwich.

6. Réservoir selon l'une des revendications 1 à 5, caractérisé en ce que ladite enveloppe externe (11) est réalisée par enroulement filamentaire d'un matériau composite.

7. Réservoir selon l'une des revendications 1 à 6, caractérisé en ce que lesdits moyens de fixation (3) comprennent :
- une embase (30) ayant une partie tubulaire (32) terminée à l'une de ses extrémités par une collerette (31) de plus grand diamètre que le diamètre de ladite partie tubulaire (32) et comportant à l'extrémité opposée à celle munie de ladite collerette (31), un filetage extérieur, ladite collerette (31) venant en appui contre ledit élément de renfort (2), à l'intérieur de ladite enveloppe externe (11) de sorte que ladite partie tubulaire (32) soit saillante hors dudit réservoir (1),
- un élément de fixation (34) venant se visser sur le filetage extérieur de ladite embase (30) pour exercer une pression sur ladite enveloppe externe (11).

8. Réservoir selon la revendication 7, caractérisé en ce que ladite collerette (31) est plane.

9. Procédé de fabrication d'un réservoir selon l'une des revendications 1 à 8, caractérisé en ce qu'il comprend les opérations suivantes :
- moulage de ladite enveloppe interne (10), la forme de ladite enveloppe interne (10) étant adaptée pour que l'insertion dudit élément de renfort (2) ne perturbe pas le profil prévu pour ledit réservoir (1),
- collage dudit élément de renfort (2) à ladite enveloppe interne (10),
- enroulement filamentaire du matériau constituant ladite enveloppe externe (11) autour de ladite enveloppe interne (10) munie dudit élément de renfort (2), pour obtenir ledit réservoir (1),
- traitement thermique dudit réservoir (1),
- perçage desdites première et deuxième ouvertures (16, 22).

## Patentansprüche

1. Behälter, der ein unter Druck stehendes Fluid aufnehmen soll, mit einem zentralen Bereich, Mantel genannt, von im wesentlichen zylindrischer Form und zwei im wesentlichen sphärischen Böden, die den Mantel an seinen beiden Enden verschließen, wobei der Behälter aufweist:
- eine äußere Hülle aus Verbundmaterial,
- eine mit der äußeren Hülle fest verbundene innere Hülle,
- eine erste Öffnung, die die innere Hülle und die äußere Hülle durchquert,
- ein Verstärkungselement der äußeren Hülle um die erste Öffnung herum, das sich im Inneren der äußeren Hülle befindet und ebenfalls eine Öffnung, zweite Öffnung genannt, enthält, die mit der ersten Öffnung zusammenwirkt,
dadurch gekennzeichnet, daß die erste Öffnung (16) sich im Mantelbereich (12) befindet und mit Mitteln (3) zur Befestigung des Behälters versehen ist, und daß das Verstärkungselement (2)
- zwischen die innere Hülle (10) und die äußere Hülle (11) eingefügt ist,
- eine zur Innenseite des Behälters (1) ausgerichtete ebene Seite (20) und eine dieser ebenen Seite (20) entgegengesetzt liegende Seite (21) aufweist und einen derart angepaßten Umriß aufweist, daß die Außenoberfläche des Behälters (1) beibehalten wird,
- mindestens die gesamte Länge des Mantels (12) einnimmt.

2. Behälter nach Anspruch 1, dadurch gekennzeichnet, daß ein Kunststoffmaterial geringer Dichte zwischen die ebene Fläche (20) und die entgegengesetzte Fläche (21) des Verstärkungselements eingefügt ist.

3. Behälter nach einem der Ansprüche 1 oder 2, dadurch gekennzeichnet, daß das Verstärkungselement (2) zwischen der ebenen Fläche (20) und der entgegengesetzten Fläche (21) um die zweite Öffnung (22) einen zur zweiten Öffnung (22) konzentrischen Ring (26) aufweist, über dem ein ebenfalls zur zweiten Öffnung (22) konzentrischer Ring (25) angeordnet ist.

4. Behälter nach einem der Ansprüche 1 bis 3, dadurch gekennzeichnet, daß die Flächen (20, 21) des Verstärkungselements (2) aus Verbundmaterial bestehen.

5. Behälter nach Anspruch 1, dadurch gekennzeichnet, daß das Verstärkungselement (2) eine sandwichartige Struktur hat.

6. Behälter nach einem der Ansprüche 1 bis 5, dadurch gekennzeichnet, daß die äußere Hülle (11) aus einer Faser-Wicklung eines Verbundmaterials hergestellt ist.

7. Behälter nach einem der Ansprüche 1 bis 6, dadurch gekennzeichnet, daß die Befestigungsmittel (3) aufweisen:
- einen Sockel (30) mit einem rohrförmigen Teil (32), der an einem seiner Enden in einem Kragen (31) größeren Durchmessers als der Durchmesser des rohrförmigen Teils (32) endet und am entgegengesetzten Ende zu dem mit dem Kragen (31) versehenen Ende ein Außengewinde aufweist, wobei der Kragen (31) gegen das Verstärkungselement (2) im Inneren der äußeren Hülle (11) anliegt, so daß der rohrförmige Teil (32) aus dem Behälter (1) vorsteht,
- ein Befestigungselement (34), das auf das Außengewinde des Sockels (30) aufgeschraubt wird, um einen Druck auf die äußere Hülle (11) auszuüben.

8. Behälter nach Anspruch 7, dadurch gekennzeichnet, daß der Kragen (31) eben ist.

9. Verfahren zur Herstellung eines Behälters nach einem der Ansprüche 1 bis 8, dadurch gekennzeichnet, daß es die folgenden Schritte aufweist:
- Gießen der inneren Hülle (10), wobei die Form der inneren Hülle (10) so gewählt ist, daß das Einfügen des Verstärkungselements (2) nicht das für den Behälter (1) vorgesehene Profil stört,
- Festkleben des Verstärkungselements (2) an der inneren Hülle (10),
- Aufwickeln des die äußere Hülle (11) bildenden Fasermaterials um die mit dem Verstärkungselement (2) versehene innere Hülle (10), um den Behälter (1) zu erhalten,
- Wärmebehandlung des Behälters (1),
- Durchstoßen der ersten und der zweiten Öffnung (16, 22).

## Claims

1. Storage tank of the type adapted to contain a pressurised fluid and having a substantially cylindrical central part or shell and two substantially spherical domes closing said shell at respective ends, said storage tank including:
- a composite material outer layer,
- an inner layer fastened to said outer layer,
- a first opening through said inner layer and said outer layer,
- a reinforcing member for said outer layer around said first opening inside said outer layer and comprising a second opening cooperating with said first opening,
characterised in that said first opening (16) is in the shell (12) and is provided with fixing means (3) for said storage tank and in that said reinforcing member (2):
- is inserted between said inner layer (10) and said outer layer (11),
- has a plane side (20) oriented towards the interior of said storage tank (1) and a side (21) opposite said plane side (20) and having a contour such that the external surface of said storage tank (1) is not altered,
- occupies at least all the length of said shell (12).

2. Storage tank according to claim 1 characterised in that a low-density plastics material (23) is inserted between said plane side (20) and said opposite side (21) of said reinforcing member (2).

3. Storage tank according to claim 1 or claim 2 characterised in that said reinforcing member (2) comprises a ring (26) concentric with said second opening (22) between said plane side (20) and said opposite side (21), on which is superposed a ring (25) also concentric with said second opening (22).

4. Storage tank according to any one of claims 1 to 3 characterised in that said sides (20, 21) of said reinforcing member (2) are made from a composite material.

5. Storage tank according to claim 1 characterised in that said reinforcing member (2) has a sandwich structure.

6. Storage tank according to any one of claims 1 to 5 characterised in that said outer layer (11) is formed by winding on a composite material filament.

7. Storage tank according to any one of claims 1 to 6 characterised in that said fixing means (3) comprise:
- a base (30) having a tubular part (32) ending at one end in a flange (31) of greater diameter than the tubular part (32) and having at the end opposite said flange (31) an exterior screwthread, said flange (31) bearing against said reinforcing member (2) inside said outer layer (11) so that said tubular part (32) projects out of said storage tank (1),
- a fixing member (34) screwed onto the exterior screwthread of said base (30) to apply pressure to said outer layer (11).

8. Storage tank according to claim 7 characterised in that said flange (31) is plane.

9. Method of manufacturing a storage tank according to any one of claims 1 to 8 characterised in that it comprises the following operations:
- moulding said inner layer (10), the shape of said inner layer (10) being such that insertion of said reinforcing member (2) does not alter the required profile of said storage tank (1),
- bonding said reinforcing member (2) to said inner layer (10),
- winding a filament of the material constituting said outer layer (11) around said inner layer (10) fitted with said reinforcing member (2) to form said storage tank (1),
- heat treatment of said storage tank (1),
- cutting of said first and second openings (16, 22).
